# EUROPEAN PATENT SPECIFICATION

(11) **EP 2 339 809 B1**
(45) Date of publication and mention of the grant of the patent: **22.08.2012**
(21) Application number: 10191675.7
(22) Date of filing: 18.11.2010
(51) Int. Cl.: H04L 29/06

(54) **System and method for selectively providing cryptographic capabilities based on location**
System und Verfahren zur selektiven Bereitstellung positionsbasierter kryptographischer Funktionen
Système et procédé pour fournir de manière sélective des capacités cryptographiques en fonction d'un emplacement

(30) Priority: 22.12.2009 US 644118
(43) Date of publication of application: 29.06.2011
(73) Proprietor: Pitney Bowes, Inc., Stamford, CT 06926-0700 (US)
(72) Inventor: Cordery, Robert A., Danbury, CT 06811 (US); Parkos, Arthur J., Southbury, CT 06488 (US); Ryan, Frederick W., Jr., Oxford, CT 06478 (US)
(74) Representative: HOFFMANN EITLE

(56) References cited:
- WO-A1-99/65207
- WO-A1-2006/109955
- MUHLBAUER ET AL: "Location constraints in digital rights management", COMPUTER COMMUNICATIONS, ELSEVIER SCIENCE PUBLISHERS BV, AMSTERDAM, NL, vol. 31, no. 6, 26 January 2008 (2008-01-26), pages 1173-1180, XP022558971, ISSN: 0140-3664
- Shu Wang, Jungwon Min and Byung K. Yi: "Location Based Services for Mobiles: Technologies and Standards", IEEE International Conference on Communication (ICC) 2008, 19 May 2008 (2008-05-19), XP002633307, Beijing, China Retrieved from the Internet: URL:http://to.swang.googlepages.com/ICC200 8LBSforMobilessimplifiedR2.pdf [retrieved on 2011-04-18]

## Description

The present invention relates to cryptography systems, and in particular, to systems and methods for selectively providing cryptographic capabilities based on the location of a mobile cryptographic device.

In the paper entitled "Location constraints in digital rights management" published in Computer Communications 31 (2008) 1173 1180 (XP 022558971), Adam Muhlbauer et al explain that digital rights management allows information owners to control the use and dissemination of electronic documents via a machine-readable *licence.* This paper describes the design and implementation of a system for creating and enforcing licences containing location constraints that can be used to restrict access to sensitive documents to a defined area. Documents can be loaded onto a portable device and used in the approved areas, but cannot be used if the device moves to another area. A taxonomy for access control in the presence of requests to perform non-instantaneous controlled actions is proposed.

WO 2006/109955 A1 describes a method for restricting content usage in a digital rights management, in which in order to restrict or grant content usage in a certain geographic location, a geographic usage condition is additionally included in an RO of the content, and a terminal which downloads the RO checks the geographic usage condition to thus restrict or grant the using of the content in the corresponding location or area, wherein the geographic usage condition includes an item for restricting the using of the content and/or an item for granting the same, each item including information related to a location or area.

In order to protect confidential, sensitive and/or proprietary information, organizations, such as businesses, often store such information on their networks in an encrypted format. In addition, access to such information is sometimes restricted to particular secure locations, such as one or more secure buildings. In order for authorized individuals, such as employees, to gain access to such information, it will be necessary for the individuals to decrypt the encrypted information using an appropriate cryptographic key or keys and cryptographic algorithm. Typically this is done using a computer terminal (located in the secure location) that is provided with access to the network and appropriate required cyrptographic capabilities so that the encrypted data can be decrypted. The individual must also typically authenticate themselves to the computer terminal before access in this manner will be granted. Also, the computer terminal may be used to encrypt data to protect its privacy prior to being stored and/or securely transmitted to an authorized party.

Individuals are becoming more and more mobile in their daily activities, even within a secure location as described above. Such individuals use and depend on mobile computing devices such as notebook computers and handheld electronic devices such as PDA and smart phones. Such individuals would like to be able to use a mobile device to gain access to confidential, sensitive and/or proprietary information that is stored in an encrypted manner while they are located within the secure location. The organizations to which the information belongs, however, do not want authorized individuals to be able to use such mobile devices to access the information outside of the secure location in order to protect the privacy and security of the information. In addition, organizations may not want individuals to have the ability to encrypt data, especially using certain higher levels of "strong" cryptography, outside of the secure location. Thus, there is a need for a mobile device and system that will enable authorized individuals to gain access to confidential, sensitive and/or proprietary information that is stored in an encrypted manner and/or encrypt data (e.g., using "strong" cryptography), but only while they are located within a certain defined location, such as a secure location as described above.

According to a first aspect of the invention, there is provided a method of performing a cryptographic operation using a mobile electronic device, the cryptographic operation including encryption or generation of a digital signature, the method comprising: receiving a request to perform a cryptographic operation based on a first level of cryptography having a first strength in the mobile electronic device; determining, by a processing device of the mobile electronic device, whether said cryptographic operation is permitted to be performed by said mobile electronic device based on a current location of said mobile electronic device; performing said cryptographic operation based on said first level of cryptography in said mobile electronic device only if it is determined that said cryptographic operation based on said first level of cryptography is permitted; if it is determined that said cryptographic operation based on said first level of cryptography is not permitted, determining if an alternative cryptographic operation based on a second level of cryptography is permitted to be performed, said second level of cryptography having a second strength that is less than said first strength; and performing said alternative cryptographic operation based on said second level of cryptography in said mobile device only if it is determined that said alternative cryptographic operation based on said second level of cryptography is permitted.

According to a second aspect of the invention, there is provided a mobile electronic device for providing cryptographic operations including encryption or generation of a digital signature, the device comprising: a processing unit; a location determining module operatively coupled to said processing unit, said location determining module being structured to determine a current location of said mobile electronic device; and a cryptographic module; wherein said processing unit is adapted to receive a request to perform a cryptographic operation based on a first level of cryptography having a first strength and determine whether said cryptographic operation is permitted to be performed based on said current location, wherein said cryptographic module will perform said cryptographic operation based on said first level of cryptography only if it is determined that said cryptographic operation based on said first level of cryptography is permitted, and if it is determined that said cryptographic operation based on said first level of cryptography is not permitted, said cryptographic module determine if an alternative cryptographic operation based on a second level of cryptography is permitted to be performed, said second level of cryptography having a second strength that is less than said first strength, and perform said alternative cryptographic operation based on said second level of cryptography only if it is determined that said alternative cryptographic operation based on said second level of cryptography is permitted.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, serve to explain the principles of the invention. As shown throughout the drawings, like reference numerals designate like or corresponding parts. In the drawings:
FIG. 1 is a block diagram of a mobile electronic device for selectively providing cryptographic capabilities based on location according to one particular embodiment of the present invention;
FIG. 2 is a flowchart showing a method of selectively providing cryptographic functionality based on determined location according to one particular embodiment of the invention;
FIG. 3 is a block diagram of a system for selectively providing cryptographic capabilities based on location according to an alternative embodiment of the present invention; and
FIG. 4 is a flowchart showing a method of selectively providing cryptographic functionality using the system of Figure 3 according to one particular embodiment of the invention.

Directional phrases used herein, such as, for example and without limitation, top, bottom, left, right, upper, lower, front, back, and derivatives thereof, relate to the orientation of the elements shown in the drawings and are not limiting upon the claims unless expressly recited therein. As employed, herein, the statement that two or more parts or components are "coupled" together shall mean that the parts are joined or operate together either directly or through one or more intermediate parts or components. As employed herein, the statement that two or more parts or components "engage" one another shall mean that the parts exert a force against one another either directly or through one or more intermediate parts or components. As employed herein, the term "number" shall mean one or an integer greater than one (i.e., a plurality).

In one embodiment, a method of providing cryptographic functionality is provided that includes receiving a request to perform a cryptographic operation in a mobile electronic device, determining whether the cryptographic operation is permitted to be performed by the mobile electronic device based on the current location of the mobile electronic device, and performing the cryptographic operation in the mobile electronic device only if it is determined that the cryptographic operation is permitted. The method may include determining the current location in the mobile electronic device using, for example, GPS, triangulation by multiple mobile phone towers, or any other suitable method. In another embodiment, the step of determining whether the cryptographic operation is permitted to be performed by the mobile electronic device based on the current location of the mobile electronic device includes determining a round trip communications time between the mobile electronic device and an encryption controller device and determining that the cryptographic operation is permitted to be performed only if the round trip communications time is less than or equal to a threshold level.

In one particular embodiment, the requested cryptographic operation is based on a certain level of cryptography having a certain strength, and if it is determined that the cryptographic operation is not permitted, the method further includes performing an alternative cryptographic operation based on an alternative level of cryptography having an alternative strength that is less than the certain strength.

In another embodiment, a mobile electronic device providing cryptographic functionality is provided that includes a processing unit, a location determining module (e.g., a GPS receiver or a mobile phone receiver/transmitter module) operatively coupled to the processing unit that is structured to determine the current location of the mobile electronic device, and a cryptographic module. The processing unit is adapted to receive a request to perform a cryptographic operation and determine whether the cryptographic operation is permitted to be performed based on the current location. The cryptographic module will perform the cryptographic operation only if it is determined that the cryptographic operation is permitted.

In another embodiment, a system for providing cryptographic functionality is provided that includes an encryption controller device operatively coupled to a network and a mobile cryptography device operatively coupled to a network. The mobile cryptography device includes a cryptographic module and a processing unit, wherein the processing unit is adapted to receive a request to perform a cryptographic operation, determine a round trip communications time between the mobile cryptography device and the encryption controller device through the network, and determine that the cryptographic operation is permitted to be performed only if the round trip communications time is less than or equal to a threshold level, and wherein the cryptographic module will perform the cryptographic operation only if it is determined that the cryptographic operation is permitted.

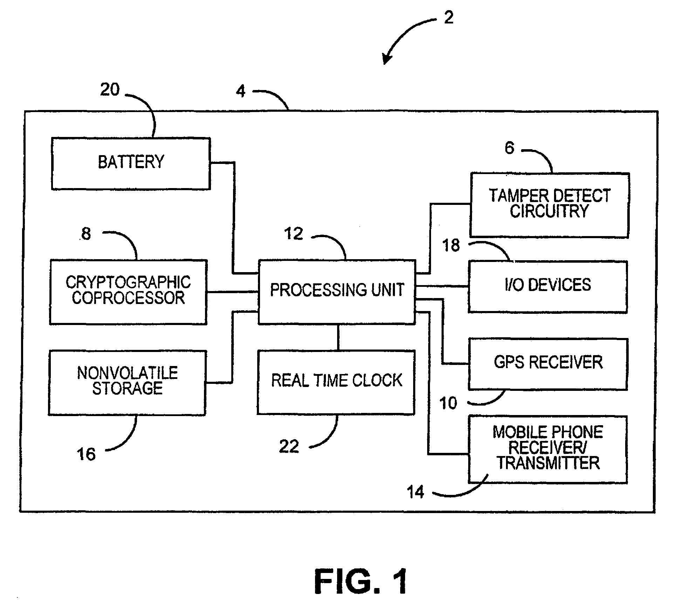

Figure 1 is a block diagram of a locationally intelligent mobile electronic device 2 for selectively providing cryptographic capabilities based on location according to one particular embodiment of the present invention. The mobile electronic device 2 includes a housing 4 which comprises a tamper detection envelope operatively coupled to tamper detect circuitry 6 provided within the housing 4. Together, the tamper detection envelope of the housing 4 and the tamper detect circuitry 6 detect efforts to tamper with (e.g., access the contents of) the mobile electronic device 2. A number of different tamper detection methodologies employing a suitable tamper detection envelope and a suitable tamper detect circuitry 6 are known in the art and thus will not be described in detail herein. In short, the tamper detection envelope of the housing 4 and the tamper detect circuitry 6 are provided in order to protect the cryptographic keys included within the cryptographic coprocessor 8 and the location indicating modules, both described in greater detail below, from tampering and to report any such tamper attempts to the processing unit 12, also described below. For example, the tamper detection circuitry 6 may respond to a tamper attempt causing the erasure of the keys in the cryptographic coprocessor 8. Alternatively, the processing unit 12 may cause erasure of the keys in the cryptographic coprocessor 8 upon receipt of a report of a tamper attempt.

As seen in Figure 1, the mobile electronic device 2 includes a processing unit 12, which may include a microprocessor, a microcontroller, or any other suitable processor, which is operatively coupled to a suitable memory for storing routines to be executed by the processing unit 12. Specifically, the memory, which may be separate from and/or internal to the microprocessor, microcontroller or other suitable processor, stores one or more routines for implementing the methods of operation described in greater detail elsewhere herein.

As also described in greater detail herein, the mobile electronic device 2 is adapted to selectively provide certain predetermined cryptographic capabilities based on the current physical location the mobile electronic device 2 that may be determined from any of a number of different sources. In the particular, non-limiting embodiment shown in Figure 1, the mobile electronic device 2 provides two different location determination methods, specifically global positioning system (GPS) coordinates, and triangulation by multiple mobile phone towers, either or both of which may be used to establish the current location of the mobile electronic device 2. Thus, mobile electronic device 2 shown in Figure 1 includes a GPS receiver 10 and a mobile phone receiver/transmitter module 14. which may be a wireless transceiver or separate wireless receiver and transmitter elements, both of which are operatively coupled to the processing unit 8. The particular manner in which data relating to the current location of the mobile electronic device 2 is derived from the outputs received from the GPS receiver 10 and the mobile phone receiver/transmitter module 14 are well known in the art and thus will not be described in greater detail herein. In addition, the GPS receiver 10 and the mobile phone receiver/transmitter module 14 may be used together to provide location information. For example, the mobile phone receiver/transmitter module 14 may be used when a GPS signal is not available. Furthermore, location information may also be determined based on information received from a trusted GPS source external to the mobile electronic device 2, or based on network traffic including cellular, Wi-Fi, satellite, etc. IP traffic may also be analyzed in an attempt to determine location. Other sensor data, such as accelerometer data, could aid in identifying potential issues with the use of the mobile electronic device 2. For example, internal navigation based upon a form of dead reckoning, which involves calculating position based upon speed, time and direction as derived from a motion based source such as a plurality of accelerometers, may be used to determine whether the location information provided by other means, such as the GPS receiver 10 or the mobile phone receiver/transmitter module 14, is accurate. Moreover, detection of anomalous data such as large scale jumps in location could be used to identify risk situations that could require further location verification before requested encryption is provided as described herein or, alternatively, that could cause shut down of the mobile electronic device 2.

Referring again to Figure 1, the mobile electronic device 2 further includes a cryptographic module in the form of a cryptographic coprocessor 8 which stores one or more cryptographic keys and associated cryptographic algorithms (which are executed by the cryptographic coprocessor 8) for encrypting and decrypting and/or digitally signing data. In one particular embodiment, the cryptographic coprocessor 8 of Figure 1 includes cryptographic keys and associated cryptographic algorithms of varying levels and strengths (e.g., bit strengths), different ones of which will be available or not available based on the determined current location of the mobile electronic device 2. For example, cryptography of a lower level/strength may be available in a wider area (in fact, its use may be unlimited) than, for example, "strong" cryptography, which will be available in a smaller limited area. The cryptographic coprocessor 8 is operatively coupled to the processing unit 12 for exchanging data therewith (e.g., data to be encrypted or decrypted and/or encrypted or decrypted data). In an alternative embodiment, the cryptographic module, rather than being in the form of the cryptographic coprocessor 8 separate from the processing unit 12, may be part of the processing unit 12. The mobile electronic device 2 further includes non-volatile storage 16 which is operatively coupled to the processing unit 12. In an alternative embodiment, the cryptographic keys may be stored in the nonvolatile storage 16.

The mobile electronic device 2 also further includes a number of I/O devices 18 for inputting information into the mobile electronic device 2 and/or outputting information from the mobile electronic device 2. For example, the I/O devices 18 may include, without limitation, a keyboard or touchscreen for manually inputting information into the mobile electronic device 2, a scanner for scam1ing data such as documents and creating an image thereof which may later be processed by the processing unit 12 using, for example, optical character recognition (OCR) software, a wireless communications element, such as an. RF transceiver or an infrared transceiver, for wirelessly receiving data from an external source such as another electronic device, or a wired connection port, such, without limitation, a USB connection, for receiving data from another source, such as another external electronic device, via a wired connection. The I/O devices 18 may further include a mechanism for receiving biometric information of a user, such as a fingerprint reading device for scanning fingerprints, a retinal scanning device for generating a retinal scan, or a digital camera for capturing an image of the face of the user. The particular types of I/O devices 18 just described are meant to be exemplary, and it should be understood that other types of I/O devices 18 are also possible.

The mobile electronic device 2 includes a battery 20 for providing power to the components of the mobile electronic device 2 described above. Preferably, the battery 20 is a rechargeable battery such as, without limitation, a rechargeable lithium ion battery. Finally, a real time clock 22 is coupled to the processing unit 12.

Furthermore, in accordance with an aspect of the present invention, in the exemplary embodiment, the non-volatile storage 16 stores information (e.g., in a table form) that, for each cryptographic key and/or algorithm that is available in the cryptographic coprocessor 8, the location or locations (e.g., in the form of GPS or similar coordinates) where that cryptographic key and/or algorithm will be available for use. For example, for a particular cryptographic key and/or algorithm, such as a strong cryptographic key and/or algorithm, the location information stored therewith may define the boundaries of a particular secure building or buildings. As a result, and as described in greater detail below, that particular cryptographic key and/or algorithm will only be able to be used if the determined location of the mobile electronic device is determined to be within the prescribed location (e.g., within the boundaries of a particular secure building or buildings).

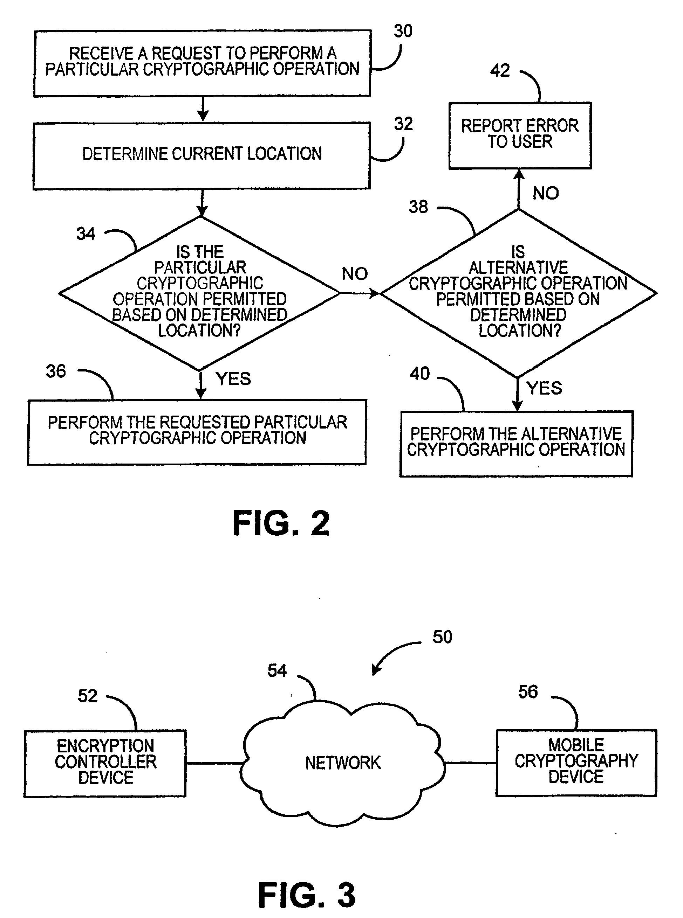

Figure 2 is a flowchart showing a method of selectively providing cryptographic functionality based on determined location according to one particular embodiment of the invention. The method shown in Figure 2 is preferably implemented in the form of one or more routines that are executable by the processing unit 12. The method begins at step 30, wherein the processing unit 12 receives a request to perform a particular cryptographic operation. For example, the request may be a. request to decrypt certain encrypted data using a particular key and algorithm, or a request to encrypt certain data and/or create a digital signature using a particular key and algorithm. Next, at step 32, the current location of the mobile electronic device 2 is determined. In one embodiment, the current location is determined by determining GPS coordinates using the GPS receiver 10. In another embodiment, the current location is determined using triangulation by multiple mobile phone towers using the mobile phone receiver/transmitter module 14. As noted elsewhere herein, other location determination methods are also possible. Then, at step 34, the processing unit 12 determines whether the particular cryptographic operation that was requested is permitted based on the determined location and the information stored in the non-volatile memory described elsewhere herein. If the answer at step 34 is yes, then, at step 36, the particular requested cryptographic operation is performed by the cryptographic coprocessor 8 and the result is returned to the processing unit 12.

If, however, the answer at step 34 is no, then optionally at step 38, the cryptographic coprocessor 8 can determine if an alternative cryptographic operation can be performed. For example, the cryptographic coprocessor 8 may perform the requested operation (e.g., encrypting certain data or creating a certain digital signature) using a lower level/strength of cryptography (e.g., using a smaller or partially known key (smaller bit strength) or a different cryptography algorithm). In one particular embodiment, multiple levels of cryptography may be available using the cryptographic coprocessor 8, and if the answer at step 38 is yes, then in step 40 the cryptographic coprocessor 8 may perform the requested operation (e.g., encrypting certain data or creating a certain digital signature) using the alternative cryptographic operation, e.g., the highest level of cryptography that is permitted, based on the determined location. For example, in this particular embodiment, the cryptographic coprocessor 8 may store a table that correlates determined location with maximum allowable cryptographic bit strengths so that the highest level of permitted cryptography may be provided based on determined location. Such a table may be securely updated on an as needed basis. In addition, use restrictions may be placed on the mobile electronic device 2 that require that it be connected back with a secure management infrastructure on a periodic basis in order to ensure that the data in the table is kept up to date. The processing unit I2 may be programmed such that if the mobile electronic device 2 does not communicate with the secure management infrastructure within an allotted time, the processing unit 12 will disable the mobile electronic device 2 until it communicates with the secure management infrastructure. If the answer in 38 is no, then in step 42 an error message is provided to the user (through one of the I/O devices 18 such as a display) indicating that the requested operation cannot be performed. As noted above, the processing performed in step 38 may be optional, and instead if the answer in step 34 is no, the processing may proceed directly to step 42 without determining if an alternative cryptographic operation can be performed.

In another alternative embodiment, if the answer at step 34 or 38 is no, then instead of merely providing an error message to the user in step 42, encryption functionality using the mobile electronic device 2 may be permanently disabled (until reset by a trusted secure management infrastructure) -

Figure 3 is a block diagram of a system 50 for selectively providing cryptographic capabilities based on location according to an alternative embodiment of the present invention. The system 50 includes an encryption controller device 52 that is operatively coupled (e.g., by a wired or wireless connection) to a network 54. The encryption controller device 52 is an electronic computing device that includes a processing unit (e.g., similar to processing unit 12), which may include a microprocessor, a microcontroller, or any other suitable processor, which is operatively coupled to a suitable memory for storing routines to be executed by the processing unit for implementing the functionality of the encryption controller device 52 in the system 50 as described in greater detail below. Network 54 may be one or more wired and/or wireless communications networks alone or in various combinations, and may include, without limitation, the Internet.

The system 50 further includes a mobile cryptography device 56 that is similar in construction to the mobile electronic device 2 shown in Figure 1 and described in detail elsewhere herein. In the exemplary embodiment, the mobile cryptography device 56 includes a housing similar to housing 4, tamper detect circuitry similar to tamper detect circuitry 6, a cryptographic coprocessor similar to cryptographic coprocessor 8, a processing unit similar to processing unit 12. nonvolatile storage similar to nonvolatile storage 16, I/O devices similar to I/O devices 18, a battery similar to 20, and a real time clock similar to real time clock 22. In addition, mobile cryptography device 56 further includes a wireless communications module that allows it to conduct wireless communications through the network 54, using for example and without limitation, cellular or Wi-Fi technology.

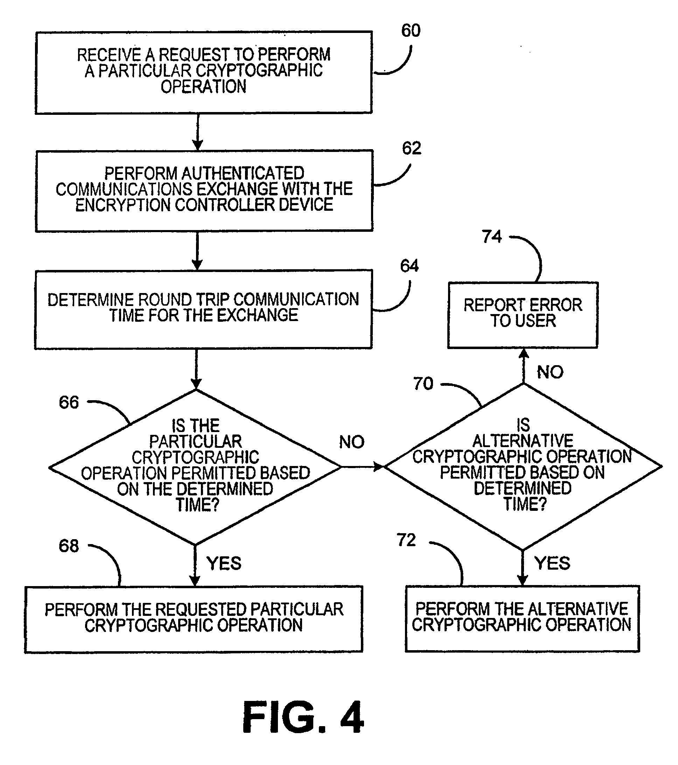

Figure 4 is a flowchart showing a method of selectively providing cryptographic functionality using the system 50 according to one particular embodiment of the invention. In this embodiment, communications transit time between the mobile cryptography device 56 and the encryption controller device 52 is used to indicate the current location of the mobile cryptography device 56, and thus whether a requested cryptographic operation should be performed. The method begins at step 60, wherein the processing unit of the mobile cryptography device 56 receives a request to perform a particular cryptographic operation. For example, the request may be a request to decrypt certain encrypted data using a particular key and algorithm, or a request to encrypt certain data and/or create a digital signature using a particular key and algorithm. Next, at step 62, an authenticated communications exchange is performed between mobile cryptography device 56 and the encryption controller device 52. In particular, the mobile cryptography device 56 generates a first message and transmits the first message to the encryption controller device 52 through the network 54. The encryption controller device 52 receives the first message, authenticates the first message (using any of a number of known techniques) and in response transmits a second message to the mobile cryptography device 56 through the network 54. The mobile cryptography device 56 then authenticates the second message (using any of a number of known techniques).

At step 64, the mobile cryptography device 56 then determines the round trip communication time for the authenticated communications exchange just described (i.e., the elapsed time between transmission of the first message and receipt of the second message). Next, at step 66, the mobile cryptography device 56 determines whether the requested particular cryptographic operation can be performed based on the determined round trip communication time. In particular, the mobile cryptography device 56 will compare the determined round trip communication time to a stored, predetermined threshold time. If the determined round trip communication time is less than or equal to the threshold time, the requested particular cryptographic operation will be permitted. If, however, the determined round trip communication time is greater than the threshold time, the requested particular cryptographic operation will not be permitted. The stored, predetermined threshold time in this embodiment is a round trip communications time that indicates a certain physical distance from the encryption controller device 52 of a device that is communicating with it. That physical distance is, in this embodiment, the outside boundary (based on the location of the encryption controller device 52) for which the requested particular cryptographic operation will be permitted. For instance, in an exemplary embodiment, each microsecond of transit time may be considered to correspond to 30 miles of distance. Thus, the physical location of the encryption controller device 52 is determined in advance to establish this boundary. If the round trip communication time determined in step 64 is greater than the threshold time, this indicates that the mobile cryptography device 56 is outside the boundary and the requested particular cryptographic operation will not be permitted. On the other hand, if the round trip communication time determined in step 64 is less than or equal to the threshold time, that indicates that the mobile cryptography device 56 is at or inside the boundary and the requested particular cryptographic operation will be permitted.

As seen in Figure 4, if the answer at step 66 is yes, then, at step 68, the particular requested cryptographic operation is performed by the cryptographic coprocessor and the result is returned, to the processing unit of the mobile cryptography device 56. If, however, the answer at step 66 is no, then, optionally at step 70, the cryptographic coprocessor of the mobile cryptography device 56 can determine if an alternative cryptographic operation can be performed. For example, the cryptographic coprocessor of the mobile cryptography device 56 may perform the requested operation (e.g., encrypting certain data or creating a certain digital signature) using a lower level/strength of cryptography (e.g., using a smaller or partially known key (smaller bit strength) or a different cryptography algorithm). In one particular embodiment, multiple levels of cryptography may be available using the cryptographic coprocessor, and if the answer at step 70 is yes, then at step 72 the cryptographic coprocessor of the mobile cryptography device 56 may perform the requested operation (e.g., encrypting certain data or creating a certain digital signature) using the alternative cryptographic operation, e.g., the highest level of cryptography that is permitted, based on the determined location. For example, in this particular embodiment, the cryptographic coprocessor may store a table that correlates a number of round trip communications times with maximum allowable cryptographic bit strengths so that the highest level of permitted cryptography may be provided based on the determined round trip communications time. Such a table may be securely updated on an as needed basis. In addition, use restrictions may be placed on the mobile cryptography device 56 that require that it communicate with a secure management infrastructure on a periodic basis in order to ensure that the data in the table is kept up to date. The processing unit of the mobile cryptography device 56 may be programmed such that if the mobile cryptography device 56 does not communicate with the secure management infrastructure within an allotted time, the processing unit will disable the mobile cryptography device 56 until it communicates with the secure management infrastructure. If the answer in step 70 is no, then at step 74 an error message is provided to the user (through one of the I/O devices such as a display) indicating that the requested operation cannot be performed. As noted above, the processing performed in step 70 may be optional, and instead if the answer at step 66 is no, the processing may proceed directly to step 74 without determining if an alternative cryptographic operation can be performed.

In another alternative embodiment, if the answer at step 66 or 70 is no, then instead of merely providing an error message to the user in step 74, encryption functionality using the mobile cryptography device 56 may be permanently disabled (until reset by a trusted secure management infrastructure).

In another alternative embodiment, the encryption controller device 52 can determine the location of the mobile cryptography device 56 based on the round trip communications time. If the determined round trip communication time is less than the predetermined threshold, the encryption controller device 52 can provide information required by the mobile cryptography device 56 to perform the requested cryptographic operation. For example, a cryptographic key required by the mobile cryptography device 56 could be split into two parts, with a first part being maintained by the mobile cryptography device 56 and a second part being maintained by the encryption controller device 52. Upon determining that the mobile cryptography device 56 is authorized to perform the requested cryptographic operation, the encryption controller device 52 will send the second part of the cryptographic key to the mobile cryptography device 56. Thus, if the mobile cryptography device 56 is not permitted to perform the requested operation, it will not have the information necessary to perform1 such operation.

White preferred embodiments of the invention have been described and illustrated above, it should be understood that these are exemplary of the invention and are not to be considered as limiting. Additions, deletions, substitutions, and other modifications can be made without departing from the scope of the present invention. For example, and without limitation, while the invention has been described herein in connection with limiting cryptographic functionality based on location within a specific secure location such as a building or buildings, it may also be used as an export compliant security device. In particular, in such an implementation, certain cryptographic functionality will only be enabled if the location of the device is determined to be within a particular country or countries. Put another way, certain cryptographic functionality (e.g., strong cryptographic functionality) will be disabled once the device is determined to have left certain predetermined countries such as the United States or has entered a country subject to export control. Accordingly, the invention is not to be considered as limited by the foregoing description but is only limited by the scope of the appended claims.

## Claims

1. A method of performing a cryptographic operation using a mobile electronic device, the cryptographic operation including encryption or generation of a digital signature, the method comprising:
receiving (30) a request to perform a cryptographic operation based on a first level of cryptography having a first strength in the mobile electronic device;
determining (34), by a processing device of the mobile electronic device, whether said cryptographic operation is permitted to be performed by said mobile electronic device based on a current location of said mobile electronic device;
performing (36) said cryptographic operation based on said first level of cryptography in said mobile electronic device only if it is determined that said cryptographic operation based on said first level of cryptography is permitted;
if it is determined that said cryptographic operation based on said first level of cryptography is not permitted, determining (38) if an alternative cryptographic operation based on a second level of cryptography is permitted to be performed, said second level of cryptography having a second strength that is less than said first strength; and
performing (40) said alternative cryptographic operation based on said second level of cryptography in said mobile device only if it is determined that said alternative cryptographic operation based on said second level of cryptography is permitted.

2. The method according to claim 1, wherein said determining comprises determining (32) said current location of said mobile electronic device.

3. The method according to claim 2, wherein said determining (32) said current location of said mobile electronic device (2) comprises determining GPS coordinates of said current location in said mobile electronic device (2).

4. The method according to claim 2 or 3, wherein said determining (32) said current location in said mobile electronic device (2) comprises determining said current location based on triangulation by multiple mobile phone towers.

5. The method according to any proceeding claim, wherein said determining (34) comprises determining a round trip communications time between said mobile electronic device (2; 56) and an encryption controller device (52) and determining that said cryptographic operation is permitted to be performed only if said round trip communications time is less than or equal to a threshold level.

6. The method according to any proceeding claim wherein determining (34) whether said cryptographic operation is permitted to be performed by said mobile electronic device (2) based on a current location of said mobile electronic device comprises determining whether said current location is within a predetermined boundary.

7. A mobile electronic device (2) for providing cryptographic operations including encryption or generation of a digital signature, the device comprising:
a processing unit (12);
a location determining module (10, 14) operatively coupled to said processing unit (12), said location determining module (10) being structured to determine a current location of said mobile electronic device (2); and
a cryptographic module (8);
wherein said processing unit (12) is adapted to receive a request to perform a cryptographic operation based on a first level of cryptography having a first strength and determine whether said cryptographic operation is permitted to be performed based on said current location, wherein said cryptographic module will perform said cryptographic operation based on said first level of cryptography only if it is determined that said cryptographic operation based on said first level of cryptography is permitted, and if it is determined that said cryptographic operation based on said first level of cryptography is not permitted, said cryptographic module determine if an alternative cryptographic operation based on a second level of cryptography is permitted to be performed, said second level of cryptography having a second strength that is less than said first strength, and perform said alternative cryptographic operation based on said second level of cryptography only if it is determined that said alternative cryptographic operation based on said second level of cryptography is permitted.

8. The mobile electronic device according to claim 7, wherein said cryptographic module (8) is part of a cryptographic coprocessor separate from and operatively coupled to said processing unit (12).

9. The mobile electronic device according to claim 7 or 8, wherein said location determining module comprises a GPS receiver (10).

10. The mobile electronic device according to claim 7, 8 or 9, wherein said location determining module (10) comprises a mobile phone receiver/transmitter module (14).

## Patentansprüche

1. Verfahren zum Durchführen einer kryptographischen Operation unter Verwendung eines mobilen elektronischen Geräts, wobei die kryptographische Operation eine Verschlüsselung oder Erzeugung einer digitalen Signatur beinhaltet, wobei das Verfahren umfasst:
Empfangen (30) einer Anfrage, eine kryptographische Operation basierend auf einem ersten Kryptographielevel mit einer ersten Stärke in dem mobilen elektronischen Gerät durchzuführen;
Bestimmen (34), durch ein Verarbeitungsgerät des mobilen elektronischen Geräts, ob die kryptographische Operation zulässig ist, von dem mobilen elektronischen Gerät durchgeführt zu werden, basierend auf einem aktuellen Standort des mobilen elektronischen Geräts;
Durchführen (36) der kryptographischen Operation basierend auf dem ersten Kryptographielevel in dem mobilen elektronischen Gerät, nur falls bestimmt ist,
dass die kryptographische Operation basierend auf dem ersten Kryptographielevel zulässig ist;
falls bestimmt ist, dass die kryptographische Operation basierend auf dem ersten Kryptographielevel nicht zulässig ist, Bestimmen (38), falls eine alternative kryptographische Operation basierend auf einem zweiten Kryptographielevel zulässig ist, durchgeführt zu werden, eines zweiten Kryptographielevels mit einer zweiten Stärke, die kleiner als die erste Stärke ist; und
Durchführen (40) der alternativen kryptographischen Operation basierend auf dem zweiten Kryptographielevel in dem mobilen Gerät, nur falls bestimmt ist, dass die alternative kryptographische Operation basierend auf dem zweiten Kryptographielevel zulässig ist.

2. Verfahren nach Anspruch 1, wobei das Bestimmen umfasst Bestimmen (32) des aktuellen Standorts des mobilen elektronischen Geräts.

3. Verfahren nach Anspruch 2, wobei das Bestimmen (32) des aktuellen Standorts des mobilen elektronischen Geräts (2) umfasst Bestimmen von GPS-Koordinaten des aktuellen Standorts in dem mobilen elektronischen Gerät (2).

4. Verfahren nach Anspruch 2 oder 3, wobei das Bestimmen (32) des aktuellen Standorts in dem mobilen elektronischen Gerät (2) umfasst Bestimmen des aktuellen Standorts basierend auf einer Triangulation durch mehrere Mobiltelefonmasten.

5. Verfahren nach einem der vorhergehenden Ansprüche, wobei das Bestimmen (34) umfasst Bestimmen einer Umlauf-Kommunikationszeit zwischen dem mobilen elektronischen Gerät (2; 56) und einem Verschlüsselungssteuergerät (52) und Bestimmen, dass die kryptographische Operation zulässig ist durchgeführt zu werden, nur falls die Umlauf-Kommunikationszeit kleiner oder gleich einem Schwelllevel ist.

6. Verfahren nach einem der vorhergehenden Ansprüche, wobei Bestimmen (34), ob der kryptographische Betrieb zulässig ist, von dem mobilen elektronischen Gerät (2) durchgeführt zu werden, basierend auf einem aktuellen Standort des mobilen elektronischen Geräts umfasst Bestimmen, ob der aktuelle Standort innerhalb einer vorbestimmten Grenze ist.

7. Mobiles elektronisches Gerät (2) zum Bereitstellen von kryptographischen Operationen, die Verschlüsseln oder Erzeugen einer digitalen Signatur beinhalten, wobei das Gerät umfasst:
eine Verarbeitungseinheit (12);
ein Standort-Bestimmungsmodul (10, 14), das operativ an die Verarbeitungseinheit (12) gekoppelt ist, wobei das Standort-Bestimmungsmodul (10) strukturiert ist, um einen aktuellen Standort des mobilen elektronischen Geräts (2) zu bestimmen; und
ein kryptographisches Modul (8);
wobei die Verarbeitungseinheit (12) eingerichtet ist, eine Anfrage zum Durchführen einer kryptographischen Operation basierend auf einem ersten Kryptographielevel mit einer ersten Stärke durchzuführen und zu bestimmen, ob die kryptographische Operation zulässig ist durchgeführt zu werden basierend auf dem aktuellen Standort, wobei das kryptographische Modul die kryptographische Operation basierend auf dem ersten kryptographischen Level durchführen wird, nur falls bestimmt ist, dass die kryptographische Operation basierend auf dem ersten Kryptographielevel zulässig ist, und falls bestimmt wird, dass die kryptographische Operation basierend auf dem ersten Kryptographielevel nicht zulässig ist, das kryptographische Modul bestimmt, falls eine alternative kryptographische Operation basierend auf einem zweiten Kryptographielevel zulässig ist durchgeführt zu werden, das zweite Kryptographielevel mit einer zweiten Stärke, die kleiner als die erste Stärke ist, und die alternative kryptographische Operation basierend auf dem zweiten Kryptographielevel durchzuführen, nur falls bestimmt ist, dass die alternative kryptographische Operation basierend auf dem zweiten Kryptographielevel zulässig ist.

8. Mobiles elektronisches Gerät nach Anspruch 7, wobei das kryptographische Modul (8) Teil eines kryptographischen Co-Prozessors verschieden und operativ gekoppelt an die Verarbeitungseinheit (12) ist.

9. Mobiles elektronisches Gerät nach Anspruch 7 oder 8, wobei das Standort-Bestimmungsmodul einen GPS-Empfänger (10) umfasst.

10. Mobiles elektronisches Gerät nach Anspruch 7, 8 oder 9, wobei das Standort-Bestimmungsmodul (10) ein Mobiltelefonempfänger-/Übermittlermodul (14) umfasst.

## Revendications

1. Procédé d'exécution d'une opération cryptographique à l'aide d'un dispositif électronique mobile, l'opération cryptographique comprenant le chiffrement ou la production d'une signature numérique, le procédé comprenant les étapes consistant à :
recevoir (30) une demande d'exécution d'une opération cryptographique fondée sur un premier niveau de cryptographie, offrant une première robustesse, sur le dispositif électronique mobile ;
déterminer (34), par un dispositif de traitement du dispositif électronique mobile, si ladite opération cryptographique peut être exécutée par ledit dispositif électronique mobile, en fonction de la position courante dudit dispositif électronique mobile ;
exécuter (36) ladite opération cryptographique fondée sur ledit premier niveau de cryptographique sur ledit dispositif électronique mobile uniquement s'il a été déterminé que ladite opération cryptographique fondée sur ledit premier niveau de cryptographie était autorisée ;
s'il a été déterminé que ladite opération cryptographique fondée sur ledit premier niveau de cryptographie n'était pas autorisée, déterminer (38) si une autre opération cryptographique, fondée sur un second niveau de cryptographie, peut être exécutée, ledit second niveau de cryptographie offrant une seconde robustesse qui est inférieure à ladite première robustesse ; et
exécuter (40) ladite autre opération cryptographique fondée sur ledit second niveau de cryptographie sur ledit dispositif électronique mobile seulement s'il est déterminé que ladite autre opération cryptographique fondée sur ledit second niveau de cryptographie est autorisée.

2. Procédé selon la revendication 1, dans lequel ladite étape de détermination comprend l'étape consistant à déterminer (32) ladite position courante dudit dispositif électronique mobile.

3. Procédé selon la revendication 2, dans lequel ladite étape de détermination (32) de ladite position courante dudit dispositif électronique mobile (2) comprend l'étape consistant à déterminer des coordonnées GPS de ladite position courante sur ledit dispositif électronique mobile (2).

4. Procédé selon la revendication 2 ou 3, dans lequel ladite étape de détermination (32) de ladite position courante dudit dispositif électronique mobile (2) comprend l'étape consistant à déterminer ladite position courante sur le fondement d'une triangulation à l'aide de multiples pylônes de téléphonie mobile.

5. Procédé selon l'une quelconque des revendications précédentes, dans lequel ladite étape de détermination (34) comprend l'étape consistant à déterminer le délai de communications aller et retour entre ledit dispositif électronique mobile (2 ; 56) et un dispositif contrôleur de chiffrement (52) et à déterminer que ladite opération cryptographique peut être exécutée uniquement si ledit délai de communication aller et retour est inférieur ou égal à un niveau de seuil.

6. Procédé selon l'une quelconque des revendications précédentes, dans lequel l'étape consistant à déterminer (34) si ladite opération cryptographique peut être exécutée par ledit dispositif électronique mobile (2) en fonction d'une position courante dudit dispositif électronique mobile comprend l'étape consistant à déterminer si ladite position courante se trouve dans des limites prédéterminées.

7. Dispositif électronique mobile (2) destiné à fournir des opérations cryptographiques comprenant le chiffrement ou la production d'une signature numérique, le dispositif comprenant :
une unité de traitement (12) ;
un module de détermination de la position (10, 14), couplé en service à ladite unité de traitement (12), ledit module de détermination de la position (10) étant structuré afin de déterminer une position courante dudit dispositif électronique mobile (2) ; et
un module cryptographique (8) ;
dans lequel ladite unité de traitement (12) est conçue pour recevoir une demande d'exécution d'une opération cryptographique fondée sur un premier niveau de cryptographie, offrant une première robustesse et pour déterminer si ladite opération cryptographique peut être exécutée, en fonction de ladite position courante ; dans lequel ledit module cryptographique exécute ladite opération cryptographique fondée sur ledit premier niveau de cryptographique uniquement s'il a été déterminé que ladite opération cryptographique fondée sur ledit premier niveau de cryptographie était autorisée et, s'il a été déterminé que ladite opération cryptographique fondée sur ledit premier niveau de cryptographie n'était pas autorisée, ledit module cryptographique détermine si une autre opération cryptographique, fondée sur un second niveau de cryptographie, peut être exécutée, ledit second niveau de cryptographie offrant une seconde robustesse qui est inférieure à ladite première robustesse, et exécute ladite autre opération cryptographique fondée sur ledit second niveau de cryptographie seulement s'il est déterminé que ladite autre opération cryptographique fondée sur ledit second niveau de cryptographie est autorisée.

8. Dispositif électronique mobile selon la revendication 7, dans lequel ledit module cryptographique (8) fait partie d'un coprocesseur cryptographique distinct de ladite unité de traitement (12) et est couplé en service à celle-ci.

9. Dispositif électronique mobile selon la revendication 7 ou 8, dans lequel ledit module de détermination de la position comprend un récepteur GPS (10).

10. Dispositif électronique mobile selon la revendication 7, 8 ou 9, dans lequel ledit module de détermination de la position (10) comprend un module émetteur-récepteur de téléphone mobile (14).
